Europäisches Patentamt

European Patent Office

Office européen des brevets

(19)

(11) **EP 0 685 726 B1**

(12) **FASCICULE DE BREVET EUROPEEN**

(45) Date de publication et mention
de la délivrance du brevet:
**01.08.2001   Bulletin 2001/31**

(51) Int Cl.[7]: **G01N 15/06**, G01N 27/64

(21) Numéro de dépôt: **95401191.2**

(22) Date de dépôt: **22.05.1995**

(54) **Sélecteur de particules chargées**

Auswahleinrichtung für geladene Teilchen

Selector of charged particles

(84) Etats contractants désignés:
**AT DE DK FR GB IT**

(30) Priorité: **24.05.1994  FR 9406273**

(43) Date de publication de la demande:
**06.12.1995   Bulletin 1995/49**

(73) Titulaire: **COMMISSARIAT A L'ENERGIE
ATOMIQUE
75015 Paris (FR)**

(72) Inventeur: **Pourprix, Michel
F-91310 Monthlery (FR)**

(74) Mandataire: **Dubois-Chabert, Guy
BREVATOME
3, rue du Docteur Lanceraux
75008 Paris (FR)**

(56) Documents cités:
**EP-A- 0 404 681**

• **DATABASE WPI Week 8440, 14 Novembre 1984
Derwent Publications Ltd., London, GB; AN
84-248832 & SU-A-1 071 947 (LEN.AVIATION
INST.) 7 Février 1984**
• **REVIEW OF SCIENTIFIC INSTRUMENTS, vol.51,
no.8, 1 Août 1980 pages 1098 - 1104
SCHOWENGERTH ET AL. 'A PARALLEL PLATE
ELECTROSTATIC SIZE CLASSIFIER,ETC.'**
• **JOURNAL OF AEROSOL SCIENCE, vol.6, 1
Décembre 1975 pages 443 - 451 KNUTSON ET
AL. 'AEROSOL CLASSIFICATION BY ELECTRIC
MOBILITY,ETC.'**

# Description

## Domaine technique

La présente invention a pour objet un sélecteur de mobilité électrique de particules chargées, utilisé en particulier (dans le cas des particules fines) afin de sélectionner des particules de granulométrie donnée (aérosol monodispersé) à partir de particules de granulométrie quelconque (aérosol polydispersé), qui sont en suspension dans l'air ou dans un autre gaz.

Entre autres applications, ce type d'appareil est par exemple particulièrement bien adapté dans le domaine de la recherche sur les aérosols, notamment pour produire des particules calibrées ou pour étudier la charge électrique des aérosols. Il convient tout spécialement pour les aérosols submicroniques jusqu'à des tailles aussi faibles que la taille des aérosols les plus fins, c'est-à-dire de l'ordre du nanomètre ($10^{-9}$m).

## Art antérieur

L'un des moyens les plus fréquemment utilisés pour sélectionner des particules monodispersées repose sur le fait que les aérosols sont pratiquement tous porteurs de charges électriques, égales à la charge électrique unitaire ou multiples de celle-ci.

Par conséquent, on a déjà utilisé pour la sélection de particules chargées en suspension dans un gaz, des champs électrostatiques agissant sur les charges électriques qu'elles portent. A cet effet, on définit couramment une notion fondamentale dans ce domaine qui est celle de la mobilité électrique d'une particule chargée placée dans un champ électrostatique. Cette grandeur, qui définit la plus ou moins grande aptitude d'une telle particule à subir une déviation sous l'effet de ce champ, peut se traduire par l'égalité suivante :

$$\vec{W} = Z\,\vec{E},$$

égalité vectorielle dans laquelle $\vec{W}$ est la vitesse de dérive acquise par la particule sous l'influence du champ électrique $\vec{E}$ à laquelle elle est soumise. Le coefficient Z de proportionnalité entre les deux grandeurs précédentes est précisément la mobilité électrique en question. Comme cette mobilité électrique est :

- d'une part proportionnelle à la charge électrique de la particule,
- et, d'autre part, inversement proportionnelle à son diamètre,

on conçoit la possibilité de réaliser de véritables sélecteurs de particules en fonction de leur mobilité électrique, consistant à soumettre des particules entraînées dans un courant gazeux à l'action d'un champ électrique existant entre deux électrodes. Sous l'effet du champ, les particules chargées se déposent, suivant leur signe, sur l'une de ces électrodes et l'abscisse de leur dépôt par rapport à la direction du courant gazeux est caractéristique de leur mobilité en ce sens que plus cette mobilité électrique est élevée, plus l'abscisse de leur dépôt est proche de l'origine du courant gazeux qui les véhicule. On obtient ainsi un étalement ou une séparation dans l'espace des particules collectées. On peut sélectionner, après cette séparation, les particules ayant une certaine mobilité, donc une certaine granulométrie si la loi de charge est connue.

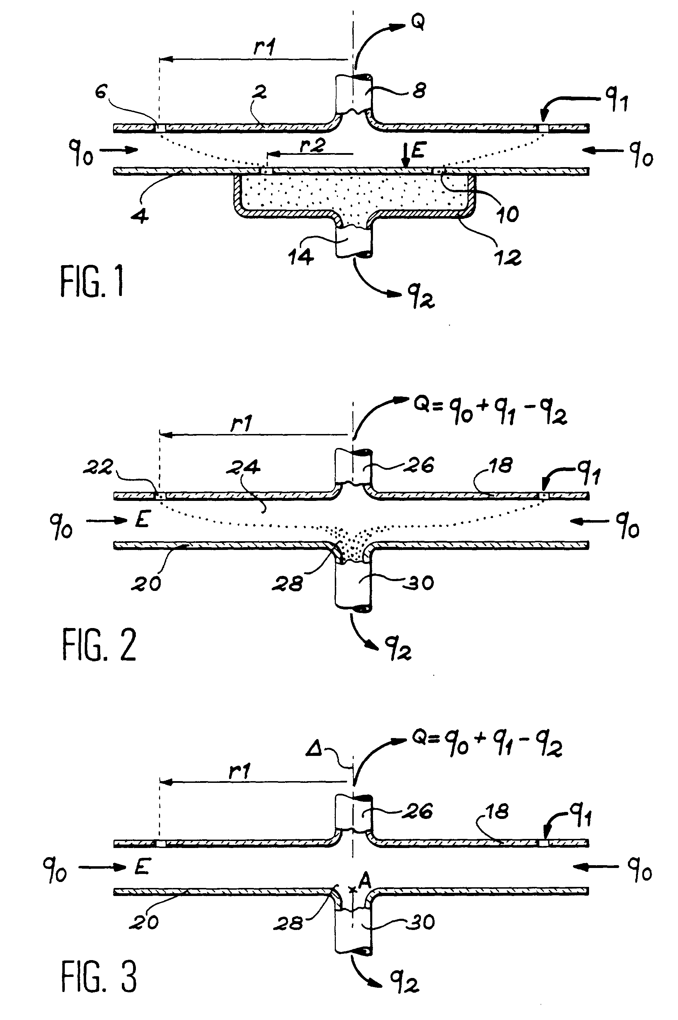

Un appareil reposant sur ce principe est décrit dans le certificat d'addition français n°90 02413 du 27/02/90, publié sous le n°2 658 916 (US-5 117 190), intitulé "capteur électrostatique de particules d'aérosol et appareils en comportant application". Ce type d'appareil est illustré sur la figure 1 et comporte deux disques conducteurs coaxiaux 2, 4 espacés et parallèles entre lesquels on établit une différence de potentiel V et, donc, un champ électrique $\vec{E}$. Le disque 2 comporte une fente annulaire 6 (rayon $r_1$) par laquelle sont introduites les particules d'un aérosol avec un débit $q_1$. Une aspiration centrale 8 est prévue, par laquelle un débit d'air Q circule sous l'effet d'une pompe non représentée sur la figure.

Les particules sont entraînées vers une seconde fente annulaire 10 de rayon $r_2$ pratiquée dans le disque 4 sous l'action conjuguée :

- d'un écoulement d'air filtré au débit $q_0$, radial et laminaire, établi entre les deux disques,
- du champ électrique E imposé entre les deux disques.

A travers la fente 10, l'air s'écoule avec un débit $q_2$ dans un boîtier cylindrique 12 accolé sous le disque 4. On a donc : $Q = q_0 + q_1 - q_2$. Les particules qui traversent la fente 10 ont la même mobilité électrique $Z = Q/\pi E(r_1^2 - r_2^2)$.

A titre indicatif, l'ordre de grandeur des débits est $q_1 = q_2 = Q/10$.

Pour régler cette mobilité électrique à la valeur souhaitable cas par cas, on peut agir sur les deux paramètres que sont le débit Q d'une part et la différence de potentiel V appliquée entre les deux disques conducteurs coaxiaux 2 et 4.

Par le boîtier cylindrique 12 et un conduit 14, les particules peuvent ensuite être dirigées vers tout type de dispositif convenant à l'application envisagée, par exemple un compteur de particules à étalonner avec les particules fines calibrées ainsi produites.

Ce type d'appareil, comme tous les sélecteurs de particules chargées existants aujourd'hui, présente toutefois certains inconvénients s'il est utilisé pour sélectionner des particules de taille nanométrique.

En premier lieu, le transport de telles particules dans les circuits du système entraîne des pertes par diffusion brownienne au voisinage des parois notamment dans le boîtier cylindrique 12.

De plus, le temps de transit dans ce boîtier, qui peut être long, n'est pas le même pour toutes les particules, et il se produit, de ce fait, une certaine dispersion à travers l'appareil, ce qui peut être préjudiciable dans certaines applications.

## Exposé de l'invention

L'invention a pour but de résoudre ces problèmes.

Elle a pour objet un sélecteur de particules d'aérosol contenues dans une atmosphère, comprenant un premier et un second disques conducteurs coaxiaux, espacés et parallèles, entre lesquels on peut établir un champ électrique en les portant à des potentiels différents, l'espace compris entre les deux disques communiquant avec l'atmosphère à examiner à travers une fente annulaire de rayon $r_1$ pratiquée dans le premier disque, le rayon $r_1$ étant centré sur l'axe des deux disques, une aspiration centrale étant prévue dans le premier disque pour faire circuler dans cet espace, à partir de la périphérie des disques, un écoulement d'air filtré laminaire, centripète et stable, caractérisé en ce que le second disque comporte un orifice d'extraction central.

Par cet orifice central, peut s'effectuer la sélection de particules d'aérosol ayant une mobilité électrique bien définie.

De plus, par rapport aux appareils connus, ce dispositif à extraction centrale est simple à réaliser, tout en garantissant des meilleurs performances, avec en particulier moins de pertes de particules fines et un temps de transit plus court dans le circuit d'extraction.

D'autres modes particuliers de réalisation de l'invention apparaissent dans les revendications dépendantes.

## Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1 représente un sélecteur de particules d'aérosol selon l'art antérieur,
- les figures 2 et 3 représentent le principe d'un sélecteur de particules selon l'invention.

## Description détaillée de modes de réalisation

La figure 2 représente un schéma d'un sélecteur selon l'invention.

L'appareil comporte deux disques 18, 20 concentriques. Le premier disque 18 présente une fente annulaire 22 de rayon $r_1$ par laquelle un échantillon de gaz contenant les particules à sélectionner est introduit avec un débit $q_1$. Les deux disques étant conducteurs, on peut donc les porter chacun à un certain potentiel et établir dans l'espace 24 qui les sépare un champ électrique $\vec{E}$. Dans le second disque 20 est pratiqué un orifice circulaire central 28 qui sera traversé par un débit d'air $q_2$. Entre les deux disques, à la périphérie de l'espace 24, est injecté, par des moyens non représentés sur la figure 2, un gaz d'entraînement (air filtré) $q_0$, tel qu'un écoulement laminaire circule entre les deux disques, jusqu'à la tubulure 26 d'aspiration centrale qui absorbe donc un débit $Q=q_0+q_1-q_2$.

Les particules sélectionnées peuvent ensuite être évacuées par un conduit 30 vers l'extérieur du sélecteur.

L'orifice central d'extraction 28 représente un point singulier à la fois du point de vue aéraulique et du point de vue électrique, comme illustré sur la figure 3.

Supposons d'abord qu'il n'y ait pas d'orifice d'extraction 28 : on peut alors définir un point A à l'intersection de l'axe central $\Delta$ de l'appareil et du disque 20.

Ce point A est un point singulier aéraulique puisqu'il correspond au point d'arrêt de l'écoulement laminaire. C'est aussi un point particulier sur le plan électrique car les lignes de champ sont mal définies à cet endroit alors qu'elles sont parfaitement définies entre les deux disques partout ailleurs (sauf à leur périphérie, mais cela n'a pas d'incidence car il n'y a pas de particules d'aérosol).

Ainsi, le bien fondé d'un orifice d'extraction 28 placé au point A n'est pas particulièrement évident. Cependant, il a été constaté que cette configuration permet de sélectionner des particules d'aérosol avec une mobilité électrique bien définie donnée par $Z=Q/\pi E r_1^2$.

Le diamètre $\varnothing$ de l'orifice 28 est de préférence choisi de façon à assurer une bonne sélectivité des particules (si le diamètre est important la sélectivité est faible) mais aussi de façon à ne pas perturber l'écoulement du fluide qui le traverse (si le diamètre est faible, il peut y avoir une trop grande perte de charge au niveau de cet orifice).

Les particules extraites du sélecteur peuvent ensuite être comptées par un détecteur choisi parmi des systèmes connus basés le plus souvent sur des méthodes optiques ou électriques.

L'appareil décrit a notamment pour application essentielle la production de particules monodispersées à partir de sources polydispersées dans le domaine des particules submicroniques. Pour produire des particules de taille déterminée, il suffit de les sélectionner en fonction de la mobilité Z correspondant a cette taille, et donc de choisir le champ E et le débit Q appropriés.

## Revendications

1. Sélecteur de mobilité électrique de particules d'aérosol contenues dans une atmosphère, comprenant un premier (18) et un second (20) disques conducteurs coaxiaux, espacés et parallèles, entre lesquels on peut établir un champ électrique E en les portant à des potentiels différents, l'espace (24) compris entre les deux disques communiquant avec l'atmosphère à examiner à travers une fente annulaire (22) de rayon $r_1$ pratiquée dans le premier disque, le rayon $r_1$ étant centré sur l'axe des deux disques, une aspiration centrale (26) étant prévue dans le premier disque pour faire circuler dans cet espace, à partir de la périphérie des disques, un écoulement d'air filtré laminaire, centripète et stable, caractérisé en ce que le second disque (20) comporte un orifice d'extraction central (28).

2. Sélecteur selon la revendication 1, un conduit central (30) étant fixé au deuxième disque, les particules étant évacuées vers l'extérieur du sélecteur par ce conduit.

3. Sélecteur selon l'une des revendications 1 ou 2, le diamètre de l'orifice d'extraction central (28) étant choisi de façon à assurer la sélectivité des particules.

**Patentansprüche**

1. Auswahleinrichtung von in einer Atmosphäre enthaltenen geladenen Teilchen nach ihrer elektrischen Beweglichkeit, zwei koaxiale leitfähige Scheiben umfassend, eine erste (18) und eine zweite (20), beabstandet und parallel, zwischen denen man ein elektrisches Feld E erzeugen kann, indem man sie an unterschiedliche Potentiale legt, wobei der zwischen den beiden Scheiben enthaltene Raum (24) mit der zu prüfenden Atmosphäre kommuniziert durch einen in der ersten Scheibe vorgesehenen ringförmigen Schlitz (22) mit einem in der Achse der beiden Scheiben zentrierten Radius $r_1$, und die erste Scheibe eine zentrale Absaugung (26) umfasst, um in diesem Raum eine vom Rand der Scheiben kommende, zentripedale und stabile Laminarströmung von gefilterter Luft zu erzeugen,
**dadurch gekennzeichnet,**
dass die zweite Scheibe (20) eine zentrale Abzugsöffnung (28) umfasst.

2. Auswahleinrichtung nach Anspruch 1, wobei eine zentrale Leitung (30) an der zweiten Scheibe befestigt ist und die Teilchen durch diese Leitung aus der Auswahleinrichtung evakuiert bzw. abgezogen werden.

3. Auswahleinrichtung nach Anspruch 1 oder 2, wobei der Durchmesser der zentralen Extraktions- bzw. Abzugsöffnung (28) so gewählt wird, dass die Selektivität bzw. Selektion der Teilchen sichergestellt ist.

**Claims**

1. Selector of aerosol particles contained in an atmosphere comprising a first (18) and a second (20), spaced, parallel, coaxial conductive disks between which it is possible to establish an electrical field E by raising them to different potentials, the space (24) between the two disks communicating with the atmosphere to be examined through an annular slot (22) of radius $r_1$ made in the first disk, the radius $r_1$ being centred on the axis of the two disks, a central intake (26) being provided in the first disk for bringing about the circulation in said space, from the periphery of the disk, of a stable, centripetal, laminar filtered air flow, the second disk (20) having a central extraction orifice (28).

2. Selector according to claim 1, a central pipe (30) being fixed to the second disk, the particles being discharged to the outside of the selector by said pipe.

3. Selector according to one of the claims 1 or 2, the diameter of the central extraction orifice (28) being chosen so as to ensure the selectivity of the particles.

FIG. 1

FIG. 2

FIG. 3